# EUROPEAN PATENT SPECIFICATION

(11) **EP 3 002 166 B1**
(45) Date of publication and mention of the grant of the patent: **15.07.2020**
(21) Application number: 14306557.1
(22) Date of filing: 02.10.2014
(51) Int. Cl.: B60S 1/34, B60S 1/52

(54) **Windscreen wiper arm with a nozzle**
Scheibenwischerarm mit einer Düse
Bras d'essuie-glace avec un gicleur

(43) Date of publication of application: 06.04.2016
(73) Proprietor: Valeo Systèmes d'Essuyage, 78322 Le Mesnil Saint Denis (FR)
(72) Inventor: Grasso, Giuseppe, 63340 Le Breuil sur Couze (FR); Schaeuble, Michael, 71665 Vaihingen/Enz (DE)
(74) Representative: Valeo Systèmes d'Essuyage

(56) References cited:
- EP-A1- 1 520 759
- DE-A1- 3 639 537
- JP-A- 2002 370 625
- JP-U- S5 495 739
- US-A1- 2007 226 983

## Description

The present invention relates to a windscreen wiper arm for a vehicle, in particular a car, this arm being of a type which comprises an end component with a U-shaped cross section, specifically for connecting the arm to a wiper blade. It also relates to an arm on which a nozzle for spraying window-cleaning liquid is installed.

A windscreen wiper arm with a washer nozzle is disclosed in document JP2002370625 A.

A car is traditionally equipped with windscreen wipers to clean the windscreen and prevent the driver's view of his surroundings being obstructed. These windscreen wipers generally include a drive arm which moves back and forth in an angular manner, and extended wiper blades, which themselves hold scraping blades made from a resilient material. These blades rub against the windscreen and remove water by moving it outside the driver's field of vision. The wiper blades are manufactured either in a traditional version in the form of hinged brackets, said brackets holding the scraping blade at several separate positions, enabling it to bend and allowing it to fit any potential curvature of the windscreen, or, in a more recent version known as the *"flat blade"* version, as a semi-rigid assembly which holds the scraping blade along its entire length thanks to one or more bending vertebrae which enable the wiper blade to be applied to the windscreen without the need to use brackets.

In both solutions the wiper blade is attached to the drive arm by means of a fixing device consisting of a connector and an adapter. The connector is a component which is fixed directly to the scraping blade or directly to the flat blade, whereas the adapter is an intermediate component which enables the connector to be connected and fixed to the drive arm. These two components are connected to each other by means of a transverse hinge pin which allows them to rotate relative to each other in a plane perpendicular to the windscreen and passing through the arm. The adapter is also arranged such that it can be engaged in a head or end component in the form of a U-shaped cowl on the drive shaft.

Windscreen wipers may comprise equipment such as means of spraying window-cleaning liquid onto the windscreen. These spraying means may be located on the hood, the windscreen array grille or, in a more recent version, on the windscreen wipers. It is, for example, known for such spraying means to be provided on the wiper blades, or even on their drive arms. In this case, the window-cleaning liquid is transported to the spraying means by ducts fixed to the arm and connected to a pump and a tank which are generally located beneath the vehicle hood.

The present invention proposes an improvement to this technology which is simple, effective and economical. It specifically relates to means of spraying window-cleaning liquid which are in particular designed to be compact and integrated in the U-shaped end component of a windscreen wiper arm.

To this end, the present invention relates to an assembly consisting of a windscreen wiper arm for a vehicle, in particular a car, and a nozzle for emitting window-cleaning liquid, the wiper arm comprising an end component having a connection portion to the rest of the arm and an end portion formed to hold a wiper blade, said connection portion being offset transversely with respect to the end portion, said connection portion and said end portion being connected by a joining portion comprising a side joining wall, said end portion comprising a wall oriented longitudinally, a cut-out passes through the thickness of said wall, said nozzle is supplied with window-cleaning liquid by a pipe which passes through said cut-out, said pipe is a cannula extending from, or being rigidly fixed to, said nozzle, wherein said cannula extends from said nozzle, running substantially parallel along the side joining wall extending said end portion to the rear, from said cut-out.

The ability to accommodate the pipe supplying window-cleaning liquid means that this pipe can follow a route inside the end portion of the arm and thus take it away from the aerodynamic flow on the windscreen.

In a particular embodiment in which the end portion is in the form of a cowl, said wall is a side wall of the cowl, located on the upstream side of said wiper blade. This makes it possible to install the nozzle for spraying window-cleaning liquid on top of the windscreen upstream of the wiper blade when said wiper blade is moving.

Said cut-out is advantageously formed such that it is able to accommodate a projection for fixing an external element to said end portion. This thus provides a simple fixing method which does not require a second cut-out or any particular means, since the cut-out created for the window-cleaning liquid supply pipe is also used to fix the nozzle.

In a particular embodiment, said cut-out has an oblong shape which is oriented longitudinally.

Said cut-out is preferably positioned longitudinally towards the rear of said wall which is oriented longitudinally. This positioning makes it possible to reduce the length of said pipe and reduces the space taken up by the assembly created by the end portion and the nozzle.

The cut-out advantageously does not extend beyond the sides of said wall which is oriented longitudinally. It may then act as a support for a window-cleaning liquid supply pipe without the need for any specific support means.

As already mentioned, according to the present invention, said pipe is a cannula extending from, or being rigidly fixed to said nozzle. This configuration offers increased compactness for the nozzle and, as a result, for said assembly.

Said nozzle is preferably adjacent to the wall holding said cut-out, and it is even more preferable for said nozzle to be held against said wall by bonding to the wall or by being inserted in or clipped onto said cut-out.

In a particular embodiment said nozzle is in the form of a truncated cone, a truncated pyramid or a flattened tent, the lower face of which is adjacent to said wall.

Said lower face preferably extends vertically over the entire height of said wall. This configuration makes it possible to create an integral assembly with the nozzle and the end portion, the aerodynamic properties of which are improved.

Said nozzle advantageously comprises end faces oriented in the front and rear directions. Even more advantageously, these end faces have openings in equal numbers for spraying a window-cleaning liquid. The presence of end faces, thus oriented, makes it possible to wet the windscreen in an effective manner.

Said cannula preferably extends from said nozzle, running along a wall extending said end portion to the rear, from said cut-out. Once again the route of the window-cleaning liquid supply pipe can be optimised and aerodynamic losses reduced.

In a particular embodiment the nozzle is in the form of a truncated pyramid or a flattened tent and one of its faces is located on the outer side of the extension to said wall which extends to the rear from said cut-out.

It will be easier to understand the invention and other details, characteristics and advantages of the invention will become apparent by reading the following description which is given by way of example, is by no means restrictive, and refers to the accompanying drawings in which:
- Fig. 1 is a schematic perspective view of a windscreen wiper according to the invention,
- Fig. 2 is a schematic perspective view, on a larger scale, of the end component of the windscreen wiper arm from Fig. 1,
- Fig. 3 is a schematic perspective view of the end component of the windscreen wiper from Fig. 1, equipped with a nozzle according to the invention,
- Fig. 4 is a schematic perspective view of the end component from Fig. 3, in dismantled position,
- Fig. 5 is a perspective view of the nozzle shown in Fig. 3,
- Fig. 6 is a schematic front view of the end component of the windscreen wiper from Fig. 1, equipped with its nozzle, and,
- Fig. 7 is a schematic view, from beneath, of the end component of the windscreen wiper from Fig. 1, equipped with its nozzle.

Note that the figures show the invention in a detailed manner for the purpose of implementing the invention, but said figures could of course be used to define the invention more accurately if necessary.

In the description below, the terms "longitudinal" and "side" refer to the orientation of the wiper blade or the drive arm. The longitudinal direction corresponds to the main axis of the wiper blade or arm in which it extends, whilst the side orientations correspond to concurrent lines, in other words, lines which intersect with the longitudinal direction, in particular at a perpendicular angle to the longitudinal axis of the wiper blade or arm in its rotation plane. In the case of longitudinal directions, the terms "external" or "internal" apply with respect to the point at which the wiper blade is fixed to the arm, the term "internal" corresponding to the portion where the arm and a half-blade are extended, or with respect to a point at which the arm is fixed to the vehicle. Directions which are referred to as upper or lower correspond to orientations perpendicular to the rotation plane of the wiper blade, whilst the term "lower" includes the plane of the windscreen. The term "horizontal" refers to a plane which is substantially parallel to the windscreen plane and the term "vertical" refers to a plane which is substantially perpendicular to the windscreen plane.

Finally, the terms "upstream" and "downstream" relate to the direction of movement of the wiper blade, in the transverse direction, where the upstream orientation corresponds to the distance of the arm from its resting position and the downstream orientation corresponds to a return to this resting position.

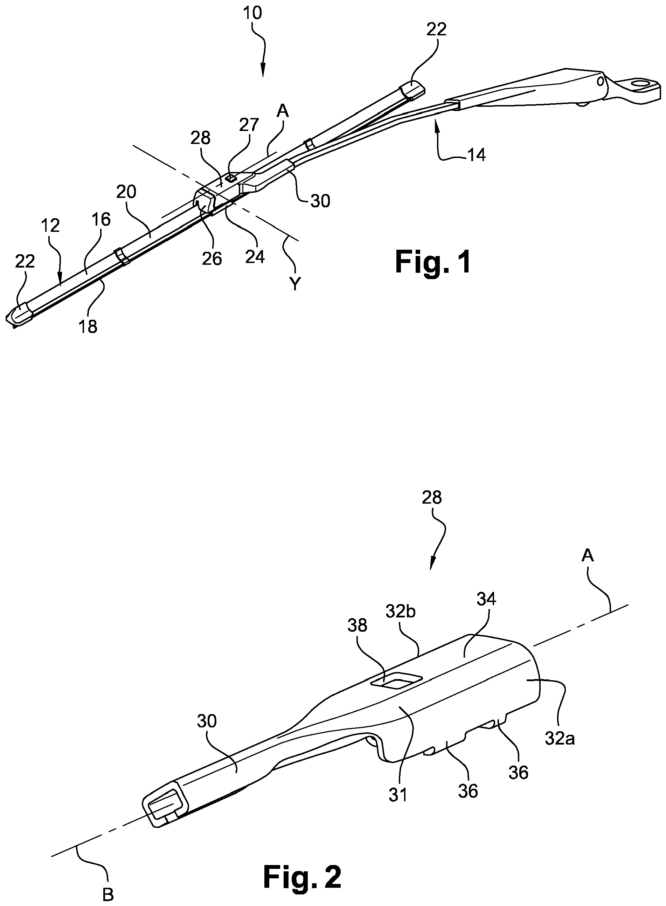

Fig. 1 shows a windscreen wiper 10 comprising, in particular, a wiper blade 12 and a drive arm 14 for the wiper blade 12.

The wiper blade 12 is preferably a flat blade and comprises a longitudinal body 16, a wiper blade rubber 18, which is generally made from rubber, and at least one vertebra (not visible) which gives the blade its rigidity and makes it easier to apply to a vehicle windscreen.

The body 16 of the wiper blade 12 may comprise an upper aerodynamic deflector 20 which is intended to improve operation of the wiping system, the aim of this deflector being to improve adhesion of the wiper blade to the windscreen and thus the aerodynamic performance of the windscreen wiper.

The wiper blade 12 may also comprise end fittings 22 or attachment clips for the blade 18 and the vertebra on the body 16, these end fittings 22 being located at each of the longitudinal ends of the body 16.

The wiper blade 12 comprises an intermediate connector 24 more or less in its middle. An adapter 26 rigidly attached to the arm 14 is fitted to the connector 24 so as to retain a degree of freedom when pivoting around a hinge pin Y which is a transverse axis which is substantially perpendicular to the longitudinal axis of the wiper blade 12. This degree of freedom allows the wiper blade 12 to pivot with respect to the arm 14 and thus allows the wiper blade to follow the curvature of the windscreen when it is in motion. The adapter 26 may be disconnected from the arm 14 by pressing a pushbutton 27 located on the adapter.

The arm 14 is intended to be driven by a motor in an angular back and forth motion which makes it possible to remove water and, if applicable, other undesirable elements from the windscreen. The adapter 26 connects the wiper blade 12 to the arm 14 and in particular to a head or end component 28 of the arm, which may be formed in one piece with the arm or may be separate and attached to said arm.

The end component 28 of the arm, which is easier to see in Fig. 2 in a version according to the prior art, is in the form of a cowl 31 with a substantially U-shaped cross section at its longitudinal end.

The end component 28 has an extended form in which the axis of extension A is generally substantially parallel to the axis of extension or longitudinal axis of the wiper blade 12. On the one hand, it includes a connection portion 30 to the rest of the arm 14, to which it is connected by crimping, for example, and, on the other hand, a terminal portion 31 in the form of a cowl with a U-shaped cross section. This connection portion 30 is generally elongated in shape and extends along an axis B which is substantially parallel to axis A and some distance from this axis, as is shown in Fig. 1 and 2. The two preceding portions are connected by a joining portion 35 which forms an angle of approximately 45° with directions A and B.

The end component 28 comprises two longitudinal side walls 32a, 32b, essentially at its distal end, the upper longitudinal edges of said walls being connected to each other by an upper transverse wall 34 to form the cowl of the end portion 31. The walls 32a, 32b, 34 define a space for accommodating the adapter 26 between their boundaries. On their lower longitudinal edges, the walls 32a, 32b comprise means 36, such as hooks, for holding the adapter 26 in the above-mentioned space.

The upper wall 34 comprises a through opening 38 with a complementary shape to the pushbutton 27. In the assembly position, the pushbutton 27 is located in this opening 38 and can pass through said opening such that it protrudes on the upper face of the wall 34. The pushbutton 27 is fitted in the opening 38 by simply engaging or interlocking.

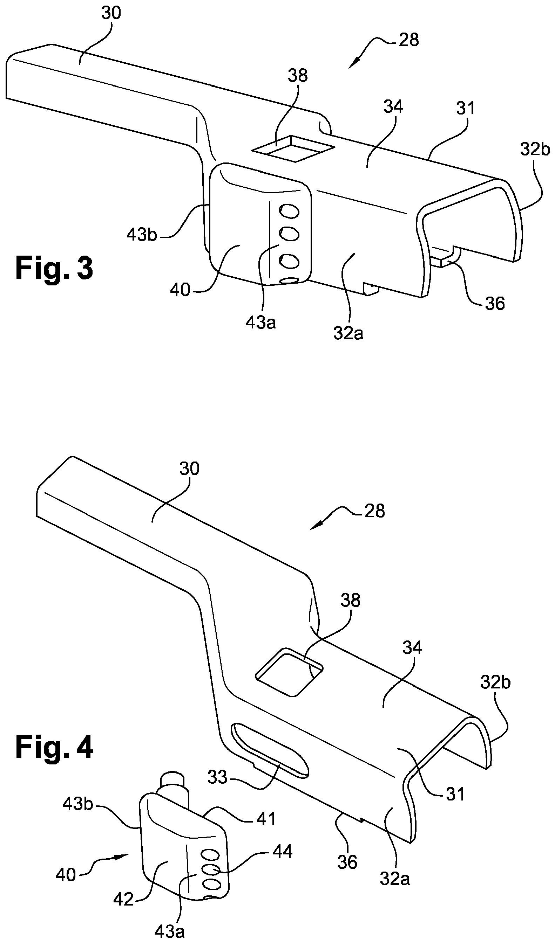

Fig. 3 and 4 show an end component 28 of the arm according to the invention on which is fitted a nozzle 40, in the assembled and non-assembled positions respectively.

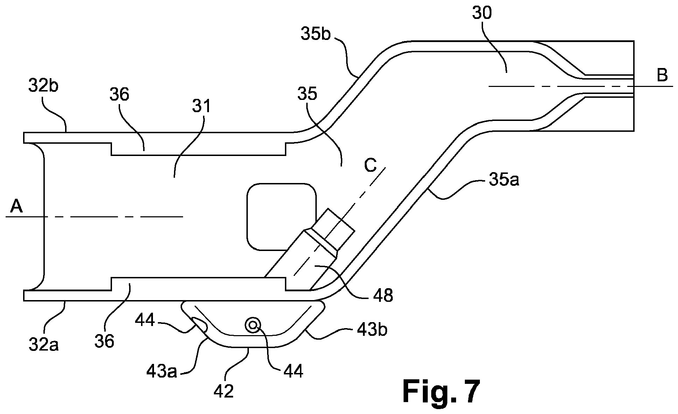

A cut-out 33 (visible on Fig. 4) passes through the thickness of the upstream side wall 32a of the end portion 31, this cut-out being oblong in shape, although this shape is not mandatory, and extending primarily in the longitudinal direction. This cut-out is positioned within the upstream side wall and does not protrude on any of the sides of this wall, such that it remains able to hold a window-cleaning liquid supply pipe within said cut-out. Finally, this cut-out is preferably placed towards the rear of the side wall 32a, as will be explained in greater detail in connection with Fig. 7.

In the assembled position, as shown in Fig. 3, the upstream side wall 32a comprises a nozzle 40, the external portion of which, in other words the portion protruding beyond the side wall, is substantially in the shape of a tent with a square base, the upper part of this tent having been flattened as in the case of a truncated cone or a truncated pyramid. In an alternative version, the nozzle 40 may also be in the form of a truncated cone or a truncated pyramid. Its downstream face 41, or larger face, in the shape of a square, is in contact with the side wall 32a, whereas its smaller face, or upstream face 42, is detached from said wall, while running parallel to said wall. The four edges of the two faces, both upstream and downstream, of the nozzle 40 are oriented in longitudinal and transverse directions. Finally, with regard to the orientation of the faces extending between the upstream and downstream faces, the lower and upper side faces are vertical, whereas the front 43a and rear 43b end faces are inclined to the front or rear respectively to improve aerodynamic performance.

With reference to Fig. 4 the nozzle 40 is extended by a cannula 48 which extends substantially downstream from the downstream face 41 and which is intended to penetrate inside the end portion 31 of the arm, by passing through its cut-out 33. This means that the cannula 48 is not visible, or is only slightly visible, from the outside of the drive arm 14 once fitted. This configuration improves the aerodynamic performance of the windscreen wiper whilst improving the aesthetics of the assembly. The cannula 48 comprises a male end fitting which is intended to be engaged in one end of a flexible pipe, the other end of said pipe being connected to a pump and a tank of window-cleaning liquid in the vehicle equipped with the windscreen wiper. Part of the pipe extends along the arm and may be fixed to said arm by appropriate means.

In this case the nozzle 40 comprises a plurality of openings 44 for spraying liquid, these extending substantially in the same plane, said plane being substantially parallel to the side wall 32a of the end portion 31 to which the nozzle is connected. They are connected to the cannula 48 by internal pipes inside the nozzle 40 (not visible on the figures).

As shown in the figures, these openings are provided in equal numbers (three in this case) on both the front and rear end faces; an additional opening (a fourth in this case) is positioned on the edge separating each of the end faces from the lower side face, still in vertical alignment with the preceding openings; finally, a final opening is positioned on the lower face and oriented downwards, in the direction of the windscreen. In this way, the majority of the liquid is sprayed in the longitudinal direction to cover all of the windscreen area wiped by the windscreen wiper. It is obvious that there are other possible configurations for positioning these openings, without departing from the scope of the invention, with a view to ensuring optimum wetting of the windscreen.

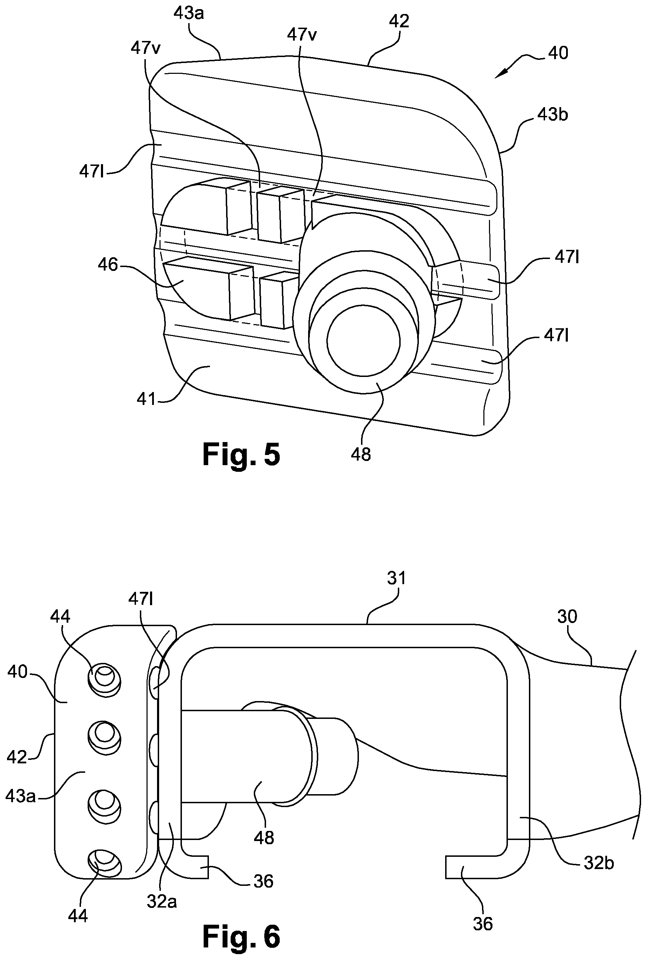

Fig. 5 shows the nozzle 40, viewed from the downstream direction. The cannula 48 is pointing in the viewer's direction from the downstream face 41 of the nozzle. This face is substantially flat, although it does have a curve on its upper portion so that it can follow the curvature at the top of the upstream side wall 32a, as shown in Fig. 6, and such that it has an optimised shape, with this side wall, both from an aerodynamic and aesthetic viewpoint. An extended projection 46 extends from the downstream face 41 in the transverse direction, and this protrudes whilst reproducing, in full, the hollow created by the cut-out 33 made in the upstream side wall 32a. The external form of this projection is illustrated in Fig. 5 by broken solid lines which are extended by dotted lines in the vicinity of grooves 471 and 47v. These grooves, the purpose of which will be explained later, create notches over the entire height of the projection 46, in the longitudinal and vertical directions respectively. In this manner, when the nozzle 40 is in position on the end portion 31 of the windscreen wiper arm, the projection 46 completely fills the space left in the cut-out 33 and rules out any possibility of relative movements between the two components. In addition, this projection is used to fix the nozzle 40 on the end portion 31 of the windscreen wiper arm by ensuring a connection between the two components in the transverse direction. This connection can be achieved, preferably by bonding, by inserting by force or even by clipping, the projection comprising one element with a slightly larger dimension than the cut-out in the latter case, but with flexibility in a given area in order to fit the nozzle to the side wall.

When the assembly is created by bonding, the downstream face 41 of the nozzle is cut by three longitudinal grooves 47I, for example, one in the upper position, one in the central position, and one in the lower position, these three grooves running over the entire length of the downstream face 41 and cutting the projection 46 into longitudinal ribs. Whilst the upper and lower grooves run at a tangent to the projection 46, at its base, the central longitudinal groove passes through said projection by dissecting it over its entire height, with the exception of the part over which the cannula 48 extends. The projection 46 is also dissected over its entire height by two vertical grooves 47v, for example, which connect the upper and lower longitudinal ribs. The projection is thus formed by a plurality of isolated pads which are separated from each other by grooves. The dotted lines in Fig. 5 illustrate the shape of the projection 46 if it was not divided into pads by said grooves. The purpose of these grooves is to allow the adhesive applied in order to fix the nozzle to flow between them when it is assembled on the upstream side wall 32a.

Fig. 6 shows the nozzle 40 in position on the end portion 31 of the windscreen wiper arm, viewed along the longitudinal direction.

It is possible to see the downstream face 41 of the nozzle which is bonded to the upstream side wall 32a and the cannula 48 which passes through the same wall and extends inside the cowl formed by the end portion. The nozzle 40 extends vertically over the entire height of the side wall 32a such that it benefits from the maximum vertical amplitude of this wall and such that as many openings 44 as possible can be positioned along this wall (three in this case in the configuration shown, plus a fourth on the lower edge). The upper horizontal face of the nozzle 40 is aligned with the upper wall 34 of the end portion and its lower horizontal face is aligned with the hooks 36 extending in the lower portion of this end portion, providing geometric continuity in appearance terms between the nozzle 40 and the end portion 31.

By the same token, in order to improve the aerodynamic qualities and aesthetics of the assembly, the downstream face 41 of the nozzle comprises an inflection in its upper portion to be aligned with the bend formed by the upstream side wall 32a and the upper wall 34 of the end portion. Although this is not shown, a similar inflection could be provided on the lower portion of the downstream face of said nozzle.

Finally, Fig. 7 shows the inside of the end component 28, viewed from beneath. With its connecting portion 30, which is offset transversely with respect to the end portion 31 with a U-shaped cross section, this end component is Z-shaped. A joining portion 35 oriented in direction C and forming, for example, an angle of approximately 45° with respect to the side directions is arranged between these two portions. This joining portion comprises two walls, upstream 35a and downstream 35b, which continue the upstream side wall 32a and downstream side wall 32b of the end portion 31 with a U-shaped cross section. The height of the side walls in this joining portion reduces gradually from the relatively high part of the side wall 32a of the end portion 31 to the relatively low part of the side wall of the connection section 30.

In order to make the window-cleaning liquid supply pipe less visible and improve the aerodynamics of the assembly, the cannula 48 extends from the body of the nozzle 40, and is oriented in the main direction C of the joining portion 35. In addition, it is located very close to the upstream side wall 35a of this joining portion and, more specifically, its direction of extension is substantially parallel to this side joining wall 35a. For this purpose, the cut-out 33 made in the upstream side wall 32a of the end portion 31 is positioned as far back as possible on this side wall. By means of these two characteristics, the window-cleaning liquid supply pipe has, on the one hand, a shape which is as linear as possible and, on the other hand, also remains relatively concealed from view.

In addition, the shape of the nozzle 40 tends to improve the aerodynamics of the assembly and to this end the longitudinal position of this nozzle and the inclination of its rear face 43b are such that this face is located in the extension of the plane of the upstream wall 35a of the joining portion 35.

Thus, the assembly formed by the nozzle 40 and the end portion 31 constitute an integral assembly with an outline with as few discontinuities as possible. The configuration of this assembly thus ensures improved passage through the air and minimises aerodynamic disturbances.

## Claims

1. Assembly consisting of a windscreen wiper arm for a vehicle, in particular a car, and a nozzle (40) for emitting window-cleaning liquid, the wiper arm comprising an end component (28) having a connection portion (30) to the rest of the arm (14) and an end portion (31) formed to hold a wiper blade, said connection portion (30) being offset transversely with respect to the end portion (31), said connection portion (30) and said end portion (31) being connected by a joining portion (35) comprising a side joining wall (35a), said end portion (31) comprising a wall (32a) oriented longitudinally, a cut-out (33) passes through the thickness of said wall, said nozzle is supplied with window-cleaning liquid by a pipe (48) which passes through said cut-out (33), said pipe is a cannula (48) extending from, or being rigidly fixed to, said nozzle **characterised in that** said cannula (48) extends from said nozzle (40), running substantially parallel along the side joining wall (35a) extending said end portion (31) to the rear, from said cut-out (33).

2. Assembly according to claim 1, in which said end portion of the wiper arm is in the form of a cowl, said wall being a side wall (32a) of the cowl, located upstream of said wiper blade (12).

3. Assembly according to either claim 1 or claim 2 in which said cut-out (33) is formed such that it is able to accommodate a projection (46) for fixing the nozzle (40) to said end portion.

4. Assembly according to any of claims 1 to 3 in which said cut-out (33) has an oblong shape which is oriented longitudinally.

5. Assembly according to any of claims 1 to 4 in which said cut-out is positioned longitudinally towards the rear of said wall which is oriented longitudinally (32a).

6. Assembly according to any of claims 1 to 5 in which the cut-out (33) does not extend beyond the sides of said wall which is oriented longitudinally (32a).

7. Assembly according to one of the preceding claims in which said nozzle (40) is adjacent to the wall (32a) holding said cut-out.

8. Assembly according to one of the preceding claims in which said nozzle (40) is held against said wall (32a) by bonding to the wall or by being inserted in or clipped onto said cut-out.

9. Assembly according to one of the preceding claims in which said nozzle (40) is in the form of a truncated cone, a truncated pyramid or a flattened tent, the lower face of which (41) is adjacent to said wall.

10. Assembly according to claim 9 in which said lower face (41) extends vertically over the entire height of said wall.

11. Assembly according to either claim 9 or claim 10 in which said nozzle comprises end faces (43a, 43b) arranged in the front and rear directions, said faces having equal numbers of openings (44) for spraying a window-cleaning liquid.

12. Assembly according to any of claims 9 to 11 in which one of the faces (43b) of a nozzle (40) in the form of a truncated pyramid or a flattened tent is located on the outer side of the extension to said wall (35a) which extends to the rear from said cut-out.

## Patentansprüche

1. Anordnung, bestehend aus einem Scheibenwischerarm für ein Fahrzeug, insbesondere ein Auto, und einer Düse (40) zum Abgeben einer Fensterputzflüssigkeit, wobei der Wischerarm eine Endkomponente (28) umfasst, die einen Anschlussabschnitt (30) zum restlichen Arm (14) und einen Endabschnitt (31), der dazu ausgebildet ist, ein Wischerblatt zu halten, aufweist, wobei der Anschlussabschnitt (30) in Bezug zum Endabschnitt (31) quer versetzt ist, wobei der Anschlussabschnitt (30) und der Endabschnitt (31) durch einen Verbindungsabschnitt (35), der eine seitliche Verbindungswand (35a) umfasst, verbunden sind, wobei der Endabschnitt (31) eine Wand (32a) umfasst, die in Längsrichtung ausgerichtet ist, wobei eine Aussparung (33) durch die Stärke der Wand verläuft, wobei der Düse über ein durch die Aussparung (33) verlaufendes Rohr (48) Fensterputzflüssigkeit zugeführt wird, wobei das Rohr eine Kanüle (48) ist, die sich von der Düse erstreckt oder starr daran fixiert ist, **dadurch gekennzeichnet, dass** sich die Kanüle (48) von der Düse (40) erstreckt, im Wesentlichen von der Aussparung (33) parallel entlang der seitlichen Verbindungswand (35a) verläuft, die den Endabschnitt (31) nach hinten verlängert.

2. Anordnung nach Anspruch 1, wobei der Endabschnitt des Wischerarms die Form einer Kappe aufweist, wobei die Wand eine Seitenwand (32a) der Kappe ist, die dem Wischerblatt (12) vorgelagert ist.

3. Anordnung nach Anspruch 1 oder Anspruch 2, wobei die Aussparung (33) derart ausgebildet ist, dass sie einen Vorsprung (46) zum Fixieren der Düse (40) am Endabschnitt aufnehmen kann.

4. Anordnung nach einem der Ansprüche 1 bis 3, wobei die Aussparung (33) eine längliche Form aufweist, die in Längsrichtung ausgerichtet ist.

5. Anordnung nach einem der Ansprüche 1 bis 4, wobei die Aussparung in Längsrichtung in Richtung der Rückseite der in Längsrichtung ausgerichteten Wand (32a) positioniert ist.

6. Anordnung nach einem der Ansprüche 1 bis 5, wobei sich die Aussparung (33) nicht über die Seiten der in Längsrichtung ausgerichteten Wand (32a) hinaus erstreckt.

7. Anordnung nach einem der vorstehenden Ansprüche, wobei die Düse (40) an die die Aussparung aufweisende Wand (32a) angrenzt.

8. Anordnung nach einem der vorstehenden Ansprüche, wobei die Düse (40) durch Anhaften an der Wand oder durch Einsetzen oder Einrasten in der Aussparung an der Wand (32a) gehalten wird.

9. Anordnung nach einem der vorstehenden Ansprüche, wobei die Düse (40) die Form eines Kegelstumpfs, eines Pyramidenstumpfs oder eines abgeflachten Zelts aufweist, dessen Unterseite (41) an die Wand angrenzt.

10. Anordnung nach Anspruch 9, wobei sich die Unterseite (41) vertikal über die gesamte Höhe der Wand erstreckt.

11. Anordnung nach Anspruch 9 oder 10, wobei die Düse Stirnseiten (43a, 43b) umfasst, die an der Vorder- und Rückseite angeordnet sind, wobei die Seiten dieselbe Anzahl an Öffnungen (44) zum Versprühen einer Fensterputzflüssigkeit aufweisen.

12. Anordnung nach einem der Ansprüche 9 bis 11, wobei sich eine der Seiten (43b) einer Düse (40) in der Form eines Pyramidenstumpfs oder abgeflachten Zelts auf der Außenseite der Verlängerung der Wand (35a) befindet, die sich von der Aussparung nach hinten erstreckt.

## Revendications

1. Ensemble constitué d'un bras d'essuie-glace pour véhicule, notamment une automobile, et d'un gicleur (40) destiné à émettre un liquide de nettoyage des vitres, le bras d'essuie-glace comprenant un élément d'extrémité (28) ayant une partie de raccordement (30) au reste du bras (14) et une partie d'extrémité (31) formée pour maintenir un balai d'essuie-glace, ladite partie de raccordement (30) étant décalée transversalement par rapport à la partie d'extrémité (31), ladite partie de raccordement (30) et ladite partie d'extrémité (31) étant reliées par une partie de jonction (35) comprenant une paroi de jonction latérale (35a), ladite partie d'extrémité (31) comprenant une paroi (32a) orientée longitudinalement, une découpe (33) traversant l'épaisseur de ladite paroi, ledit gicleur étant alimenté en liquide de nettoyage des vitres par un tuyau (48) qui passe à travers ladite découpe (33), ledit tuyau étant une canule (48) s'étendant à partir dudit gicleur ou étant fixée rigidement à celui-ci, ledit gicleur étant **caractérisé en ce que** ladite canule (48) s'étend à partir de ledit gicleur (40), passant sensiblement parallèlement le long de la paroi de jonction latérale (35a) prolongeant ladite partie d'extrémité (31) vers l'arrière, à partir de ladite découpe (33).

2. Ensemble selon la revendication 1, ladite partie d'extrémité du bras d'essuie-glace étant en forme d'auvent, ladite paroi étant une paroi latérale (32a) de l'auvent, située en amont dudit balai d'essuie-glace (12).

3. Ensemble selon la revendication 1 ou 2, ladite découpe (33) étant formée de sorte à pouvoir recevoir une saillie (46) pour fixer le gicleur (40) à ladite partie d'extrémité.

4. Ensemble selon l'une quelconque des revendications 1 à 3, ladite découpe (33) ayant une forme oblongue qui est orientée longitudinalement.

5. Ensemble selon l'une quelconque des revendications 1 à 4, ladite découpe étant positionnée longitudinalement vers l'arrière de ladite paroi qui est orientée longitudinalement (32a).

6. Ensemble selon l'une quelconque des revendications 1 à 5, la découpe (33) ne s'étendant pas au-delà des côtés de ladite paroi (32a) qui est orientée longitudinalement.

7. Ensemble selon l'une des revendications précédentes, ledit gicleur (40) étant adjacent à la paroi (32a) contenant ladite découpe.

8. Ensemble selon l'une des revendications précédentes, ledit gicleur (40) étant maintenu contre ladite paroi (32a) par collage à la paroi ou par insertion ou clipsage dans ladite découpe.

9. Ensemble selon l'une des revendications précédentes, ledit gicleur (40) étant sous la forme d'un cône tronqué, d'une pyramide tronquée ou d'une tente aplatie, dont la face inférieure (41) est adjacente à ladite paroi.

10. Ensemble selon la revendication 9, ladite face inférieure (41) s'étendant verticalement sur toute la hauteur de ladite paroi.

11. Ensemble selon la revendication 9 ou 10, ledit gicleur comprenant des faces d'extrémité (43a, 43b) disposées dans les directions avant et arrière, lesdites faces ayant un nombre égal d'ouvertures (44) pour pulvériser un liquide de nettoyage des vitres.

12. Ensemble selon l'une quelconque des revendications 9 à 11, l'une des faces (43b) d'un gicleur (40) en forme de pyramide tronquée ou de tente aplatie étant située sur le côté extérieur du prolongement de ladite paroi (35a) qui s'étend vers l'arrière à partir de ladite découpe.
